# EUROPÄISCHE PATENTSCHRIFT

(11) **EP 0 683 633 B1**
(45) Veröffentlichungstag und Bekanntmachung des Hinweises auf die Patenterteilung: **10.12.1997**
(21) Anmeldenummer: 94927470.8
(22) Anmeldetag: 06.10.1994
(51) Int. Cl.: A47J 31/54

(54) **VERFAHREN UND VORRICHTUNG ZUR ERKENNUNG DER VERKALKUNG VON WARMWASSERERZEUGENDEN GERÄTEN**
METHOD OF DETECTING THE CALCIFICATION OF HOT-WATER GENERATION APPLIANCES AND DEVICE THEREFOR
PROCEDE ET APPAREIL POUR LA DETECTION DE L'ENTARTRAGE D'APPAREILS PRODUCTEURS D'EAU CHAUDE

(30) Priorität: 15.12.1993 CH 3754/93
(43) Veröffentlichungstag der Anmeldung: 29.11.1995
(73) Patentinhaber: JURA ELEKTROAPPARATE AG, CH-4626 Niederbuchsiten (CH)
(72) Erfinder: REYHANLOO, Shahryar, CH-2540 Grenchen (CH); HERMANN, Markus, CH-4710 Balsthal (CH); GYGAX, Hans, CH-4900 Langenthal (CH)
(74) Vertreter: Lusuardi, Werther Giovanni, Dr.
(86) Internationale Anmeldenummer: CH9400201
(87) Internationale Veröffentlichungsnummer: WO9516378

(56) Entgegenhaltungen:
- DE-A- 2 505 789
- DE-A- 3 045 121
- DE-B- 2 839 062
- FR-A- 2 683 318
- GB-A- 2 109 097
- US-A- 4 024 751
- US-A- 4 972 099
- US-A- 5 171 518

## Beschreibung

Die Erfindung bezieht sich auf ein Verfahren zur Erkennung der Verkalkung von warmwassererzeugenden Geräten gemäss dem Oberbegriff des Patentanspruchs 1.

Bei einer grossen Anzahl von Geräten im Haushalt und in der Industrie, beispielsweise Warmwasserboiler, Dampfbügeleisen, Dampfreiniger, Geschirrspülautomaten Kaffeeautomaten, Klimageräten und Waschautomaten spielt die durch den Warmwasserbetrieb verursachte Verkalkung der wasserführenden Bereiche eine grosse Rolle, indem dadurch der Betrieb dieser Geräte einer graduellen Verschlechterung bis hin zur eigentlichen Funktionsstörung unterworfen ist.
Der frühzeitigen Erkennung und Anzeige der eingetretenen Verkalkung solcher Geräte kommt somit ein hoher Stellenwert zu.

Bisher musste die Verkalkung solcher Geräte vom Benutzer aufgrund der verschlechterten Funktion selbst erkannt werden. Bei Kaffeeautomaten beispielsweise wird der sogenannte Thermoblock (Aluminiumblock mit spiralförmiger Wasserführung und Aufheizvorrichtung) durch die zunehmende Verkalkung für den Durchtritt des Wassers immer weniger durchlässig (Verengung des Leitungsquerschnitts). Des weiteren wird durch den Kalk die Wärmeübertragung zwischen Thermoblock und Wasser beeinträchtigt, wodurch das Wasser am Thermoblockausgang laufend kälter wird. Das nicht mehr die optimale Temperatur aufweisende Wasser wird nun der Brüheinheit des Kaffeeautomaten zugeführt und erzeugt dort einen immer kälteren Kaffee. Da die eintretende Verschlechterung des erzeugten Kaffees eine graduelle ist, wird sie vom Benutzer nur schlecht - und überdies nicht unbedingt als von der Verkalkung verursacht - erkannt. Das oben anhand eines Kaffeeautomaten erörterte Problem der zunehmenden Verkalkung tritt auch bei allen anderen warmwassererzeugenden Geräten in dieser oder ähnlicher Form auf.

Aus der GB-A-2 109 097 ist eine Kaffeemaschine bekannt, bei welcher die Temperatur im Heizblock gemessen wird, d.h. es wird der Temperaturanstieg detektiert, welcher bei einer Verkalkung des Heizblocks entsteht. Damit lässt sich aber nicht der Temperaturabfall im Wasser selbst messen, wie er durch die Verkalkung des Heizers entsteht. Ein relevanter Stand der Technik ist auch aus der DE-A- 3045121 bekannt.

Hier will die Erfindung Abhilfe schaffen. Der Erfindung liegt die Aufgabe zugrunde, ein Verfahren zur benutzerunabhängigen Erkennung der Verkalkung von warmwassererzeugenden Geräten zu schaffen, das einerseits einfach, sicher und kostengünstig ist, anderseits den Betrieb des Gerätes nicht stört oder einstellt. Die Erfindung löst die gestellte Aufgabe mit einem Verfahren, welches die Merkmale des Anspruchs 1 aufweist und einer Vorrichtung, welche die Merkmale des Anspruchs 11 aufweist.

Die durch die Erfindung erreichten Vorteile sind im wesentlichen darin zu sehen, dass dank der relativen (statt absoluten) Temperaturmessung eine grosse Adaptationsfähigkeit und Betriebssicherheit erreicht werden kann. Ein weiterer Vorteil des Verfahrens besteht darin, dass bei einer Anzeige der eingetretenen Verkalkung kein Betriebsunterbruch erfolgt. Bei einem Kaffeeautomaten beispielsweise, kann somit weiterhin Kaffee erzeugt werden; das Gerät wird in keinem Fall blockiert.

Die Messung der Temperatur T_{g} des für den Betrieb des Gerätes erwärmten Wassers erfolgt zweckmässigerweise jedesmal nach einem Kaltstart des Gerätes (üblicherweise werden Kaffeeautomaten über Nacht abgestellt und am Morgen wieder eingeschaltet. Der optimale Zeitpunkt für die Temperaturmessung ist unmittelbar nach Ende der Betätigung der Wasserpumpe des Kaffeeautomaten, d.h. die Wasserpumpe hat ca. 50 ml Wasser durch den Thermoblock (Warmwassererzeuger) gefördert und das dort aufgeheizte Wasser zur Brüheinheit (Warmwasserverbraucher) transportiert, wo das in der Brüheinheit kompaktierte Kaffeepulver vom Wasser durchströmt und der Kaffee erzeugt wird.
Die Messung der Temperatur T_{g} erfolgt mittels eines zwischen dem Warmwassererzeuger und dem Warmwasserverbraucher angeordneten Temperatursensors. Die vom Temperatursensor gemessenen Werte werden durch den Mikroprozessor oder Mikrochip des Gerätes im EEPROM ("electrically erasable programmable read only memory") abgespeichert.

Um aus dem gemessenen Temperaturwert T_{g} eine Aussage über den Verkalkungsgrad des Gerätes gewinnen zu können, benötigt man einen Vergleichswert, der dem unverkalkten Zustand des Gerätes, d.h. dem Neuzustand entspricht. Zu diesem Zweck ist der Rechner (Mikrochip oder Mikroprozessor) des Kaffeeautomaten derart programmiert, dass nach einer vorbestimmten Anzahl N (N = ganze Zahl) Kaltstarts (was gleichbedeutend mit einer entsprechenden Anzahl von Spülvorgängen ist), der dann gemessene Wert als Anfangstemperaturwert Tₐ im EEPROM gespeichert wird. Die Zahl N liegt dabei vorzugsweise im Bereich von 1 - 50. Dieser einmal gespeicherte Vergleichswert Tₐ kann vom Benützer nicht mehr verändert werden und bleibt auch nach einer von diesem durchgeführten Entkalkungsoperation unverändert bestehen.

Der Temperatursensor des Kaffeeautomaten misst nun nach jedem Kaltstart die Temperatur T_{g} des Wassers und leitet diesen Wert dem Rechner zu, wo ein Vergleich mit dem Anfangstemperaturwert Tₐ durchgeführt wird. Wird nach einer bestimmten Betriebsdauer ein vorgegebener Differenzwert ▲T überschritten, erzeugt der Rechner ein Signal, welches einer Anzeigevorrichtung, z.B. einem akustischen Alarm, LED ("light emitting diode"), einem Bildschirm oder einer LCD-Anzeige ("liquid crystal display") auf der Frontplatte des Kaffeeautomaten zugeführt wird und dort die Verkalkung des Gerätes angezeigt. Zweckmässigerweise erfolgt die Signalerzeugung erst nach einer wiederholten, aufeinanderfolgenden Überschreitung des vorgegebenen Differenzwertes ▲T, vorzugsweise nach einer 2-fachen bis 10-fachen Wiederholung.

Der vorgegebene Differenzwert ▲T kann innerhalb weiter Grenzen gewählt werden, welche auch den Benutzergewohnheiten Rechnung trägt. Als zweckmässig haben sich Differenzwerte ▲T im Bereich von 2° - 10°C, vorzugsweise 5° - 8°C erwiesen.

Wird die Verkalkung des Gerätes auf der Anzeige angezeigt, so wird der Betrieb des Gerätes dadurch nicht beeinflusst. Der Benutzer kann also weiterhin dem Gerät Kaffee entnehmen. Es ist dem Benutzer überlassen den Entkalkungsprozess (nach den Angaben des Geräteherstellers) durchzuführen oder auch nicht.
Um die Berechtigung von Garantieansprüchen bei einer späteren Revision des Gerätes eindeutig abklären zu können, werden die Anzahl Bezüge von Kaffee, nach erfolgter Anzeige der Verkalkung im Rechner des Gerätes summiert und gespeichert, so dass sich feststellen lässt wie lange das Gerät im verkalkten Zustand weiterbenutzt wurde.

Die Erfindung wird im folgenden anhand der schematischen Darstellungen eines Ausführungsbeispiels für eine Kaffeemaschine noch näher erläutert.

Es zeigt:

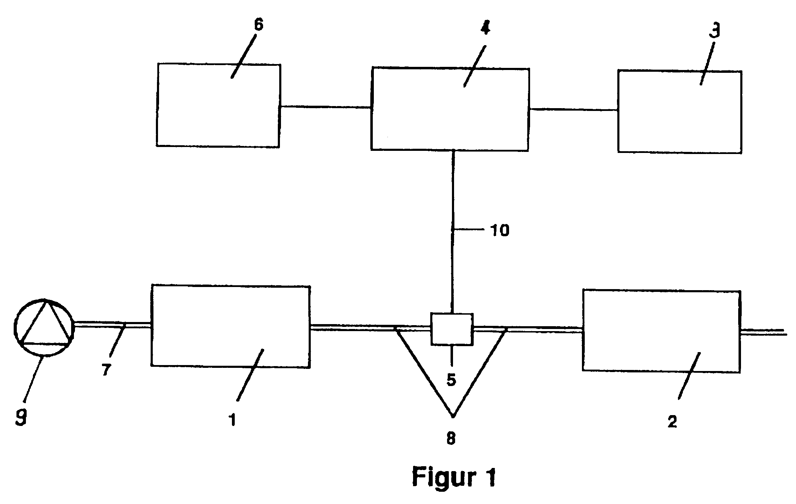

Fig. 1 eine schematische Darstellung eines Kaffeeautomaten zur Durchführung des erfindungsgemässen Verfahrens.

Der in Fig. 1 schematisch dargestellte Kaffeeautomat besteht im wesentlichen aus einem als Thermoblock ausgebildeten Wassererhitzer 1, einem als Brüheinheit ausgebildeten Warmwasserverbraucher 2. Die weiteren Details eines solchen Kaffeeautomaten, welche im Zusammenhang mit dem erfindungsgemässen Verfahren nicht von besonderer Bedeutung sind, sind beispielsweise in der EP-B1 0 312 901 im Detail beschrieben.

Das mittels der Pumpe 9 durch die Zufuhrleitung 7 dem Warmwassererzeuger 1 zugeführte Frischwasser wird in letzterem auf die vom Hersteller als optimal erachtete Betriebstemperatur aufgewärmt und durch die Warmwasserleitung 8 dem Warmwasserverbraucher 2 zugeführt. Zwischen dem Warmwassererzeuger 1 und dem Warmwasserverbraucher 2 ist direkt in der Warmwasserleitung 8 ein Temperatursensor 5 angeordnet, der nach jedem Kaltstart des Kaffeeautomaten die Temperatur T_{g} misst, den gemessenen Wert über die elektrische Leitung 10 dem Rechner 4 zugeführt und in dessen als EEPROM ausgebildeten Speicher 3 abspeichert.

Als Temperatursensor 5 ist jeder schnell reagierende Temperatursensor geeignet. Als vorteilhaft hat sich ein Sensor erwiesen, der in einem, thermisch unbeeinflussbaren Spezialgehäuse aus Kunststoff eingebaut wird, derart dass der dem Warmwasserstrom ausgesetzte Temperatursensor 5 kleinste Temperaturänderungen des Wassers, über entsprechende elektrische Widerstandsveränderungen, in kurzer Reaktionszeit dem Rechner 4 signalisieren kann.

Als Vergleichswert für den vom Temperatursensor 5 aktuell gemessenen Temperaturwert T_{g} wird ein Anfangstemperaturwert Tₐ verwendet, welcher der nach fünf Kaltstarts des Gerätes gemessenen Temperatur T_{g} entspricht und ebenfalls im Speicher 3 abgespeichert wird. Bei jeder Temperaturmessung wird nun der Wert T_{g} mit Tₐ verglichen und mit einem (vom Hersteller) ebenfalls im Speicher 3 abgespeicherten Differenzwert ▲T von 7°C verglichen. Wird dieser Differenzwert dreimal hintereinander überschritten, so wird die Verkalkung des Gerätes an der Anzeige 6 des Kaffeeautomaten akustisch und/oder optisch angezeigt. Der Benützer sollte nun den Entkalkungsvorgang des Kaffeeautomaten einleiten. Unterlässt er dies, so kann er weiterhin Kaffee dem Kaffeeautomaten entnehmen, doch wird jeder Bezug nach erfolgtem Entkalkungsalarm im Speicher 3 festgehalten.

## Patentansprüche

1. Verfahren zur Erkennung der Verkalkung von warmwassererzeugenden Geräten, welche einen Warmwassererzeuger (1), einen Warmwasserverbraucher (2) und eine den Warmwassererzeuger (1) und Warmwasserverbraucher (2) miteinander verbindende Warmwasserleitung (8) umfassen, dadurch gekennzeichnet, dass die Temperatur T_{g} des für den Betrieb des Gerätes erwärmten Wassers in der Warmwasserleitung (8) wiederholt gemessen und mit einem Anfangstemperaturwert Tₐ, was dem unverkalten Zustand des Geräts entspricht, verglichen wird und bei Überschreiten eines vorgegebenen Differenzwertes ▲T die Verkalkung des Gerätes angezeigt wird.

2. Verfahren nach Anspruch 1, dadurch gekennzeichnet, dass die Messung der Temperatur T_{g} nach jedem Kaltstart des Gerätes erfolgt.

3. Verfahren nach Anspruch 1 oder 2, dadurch gekennzeichnet, dass der Anfangstemperaturwert Tₐ der nach N (N = ganze Zahl) Kaltstarts des Gerätes gemessenen Temperatur T_{g} entspricht, wobei die Zahl N vorzugsweise im Bereich von 1 - 50 liegt.

4. Verfahren nach einem der Ansprüche 1 bis 3, dadurch gekennzeichnet, dass die Verkalkung des Gerätes erst nach einer wiederholten, aufeinanderfolgenden Überschreitung des vorgegebenen Differenzwertes ▲T erfolgt, vorzugsweise nach einer 2-fachen bis 10-fachen Wiederholung.

5. Verfahren nach einem der Ansprüche 1 bis 4, dadurch gekennzeichnet, dass der vorgegebene Differenzwert ▲T im Bereich von 2° - 10°C, vorzugsweise 5° - 8°C liegt.

6. Verfahren nach einem der Ansprüche 1 bis 5, dadurch gekennzeichnet, dass die Anzeige der Verkalkung des Gerätes akustisch oder optisch, vorzugsweise auf einem Bildschirm, LED oder einer LCD-Anzeige, erfolgt.

7. Verfahren nach einem der Ansprüche 1 bis 6, dadurch gekennzeichnet, dass der Anfangstemperaturwert Tₐ in einem elektronischen Speicher (3) des Gerätes, vorzugsweise in einem EEPROM, gespeichert wird.

8. Verfahren nach einem der Ansprüche 1 bis 7, dadurch gekennzeichnet, dass der Vergleich der gemessenen Temperatur T_{g} mit dem Anfangstemperaturwert Tₐ und die Erzeugung des Signals für die Anzeige der Verkalkung des Gerätes elektronisch erfolgt, vorzugsweise in einem Rechner (4) des Gerätes.

9. Verfahren nach einem der Ansprüche 1 bis 8, dadurch gekennzeichnet, dass die Anzeige der Verkalkung des Gerätes in einem elektronischen Speicher (3) des Gerätes, vorzugsweise in einem EEPROM, gespeichert wird.

10. Anwendung des Verfahrens nach einem der Ansprüche 1 - 9 auf Vorrichtungen zur Wassererwärmung, insbesondere Boiler, Dampfbügeleisen, Dampfreiniger, Geschirrspülautomaten, Kaffeeautomaten, Klimageräten und Waschautomaten.

11. Vorrichtung zur Durchführung des Verfahrens nach einem der Ansprüche 1 - 9, Welche einen Warmwassererzeuger (1), einen Warmwasserverbraucher (2), und eine den Warmwassererzeuger (1) und Warmwasserverbraucher (2) miteinder verbindende Warmwasserleitung (8), gekennzeichnet durch einen an der Warmwasserleitung (8) angeordneten Temperatursensor (5), einem Rechner (4), dem die vom Temperatursensor (5) erzeugten Signale zur Speicherung, Vergleichung und Verarbeitung zugeführt werden und einer Anzeigevorrichtung (6), welche ein vom Rechner (4) erzeugtes Signal für das Bestehen einer Verkalkung optisch oder akustisch darstellt.

12. Vorrichtung nach Anspruch 11, dadurch gekennzeichnet, dass der Temperatursensor (5) direkt in der den Warmwassererzeuger (1) mit dem Warmwasserverbraucher (2) verbindenden Warmwasserleitung (8) angebracht ist und mittels eines Kunststof£gehäuses mechanisch geschützt, thermisch und elektrisch jedoch nicht vom Wasser isoliert ist.

13. Vorrichtung nach Anspruch 11 oder 12, dadurch gekennzeichnet, dass sie eine Betätigungsvorrichtung umfasst um den Entkalkungsvorgang einzuleiten.

## Claims

1. Method for detecting calcification of water-heating appliances which comprise a hot water generator (1), a hot water consumer (2) and a hot water pipeline (8) connecting together the hot water generator (1) and the hot water consumer (2), **characterised in that**, in the hot water pipeline (8), the temperature T_{g} of the water heated for the operation of the appliance is repeatedly measured and compared with an initial temperature value Tₐ which corresponds to the uncalcified state of the appliance, and, when a preset differential value ΔT is exceeded, calcification of the appliance is indicated.

2. Method according to claim 1, characterised in that the temperature T_{g} is measured after each cold start of the appliance.

3. Method according to claim 1 or 2, characterised in that the initial temperature value Tₐ corresponds to the temperature T_{g} measured after N (N = whole number) cold starts of the appliance, wherein the number N is preferably in the range between 1 and 50.

4. Method according to one of claims 1 to 3, characterised in that calcification of the appliance results only after the preset differential value ΔT is exceeded repeatedly and successively, preferably after repetition twice to ten times.

5. Method according to one of claims 1 to 4, characterised in that the preset differential value ΔT is in the range between 2° and 10°C, preferably between 5° and 8°C.

6. Method according to one of claims 1 to 5, characterised in that calcification of the appliance is indicated acoustically or optically, preferably on a screen, LED or liquid crystal display.

7. Method according to one of claims 1 to 6, characterised in that the initial temperature value Tₐ is stored in an electronic memory (3) of the appliance, preferably in an EEPROM.

8. Method according to one of claims 1 to 7, characterised in that comparison of the measured temperature T_{g} with the initial temperature value Tₐ and generation of the signal for indication of calcification of the appliance take place electronically, preferably in a computer (4) of the appliance.

9. Method according to one of claims 1 to 8, characterised in that indication of calcification of the appliance is stored in an electronic memory (3) of the appliance, preferably in an EEPROM.

10. Application of the method according to one of claims 1 to 9 to apparatuses for heating water, in particular boilers, steam irons, steam purifiers, automatic dishwasher machines, automatic coffee makers, air conditioners and automatic washing machines.

11. Apparatus for implementing the method according to one of claims 1 to 9, which [sic] a hot water generator (1), a hot water consumer (2) and a hot water pipeline (8) connecting together the hot water generator (1) and the hot water consumer (2), characterised by a temperature sensor (5) arranged on the hot water pipeline (8), a computer (4) which is supplied with the signals generated by the temperature sensor (5), for storage, comparison and processing, and an indicating device (6) which optically or acoustically represents a signal generated by the computer (4) for the presence of calcification.

12. Apparatus according to claim 11, characterised in that the temperature sensor (5) is fitted directly in the hot water pipeline (8) connecting the hot water generator (1) to the hot water consumer (2) and is protected mechanically by means of a plastics housing but is thermally and electrically uninsulated from the water.

13. Apparatus according to claim 11 or 12, characterised in that it comprises an actuation device in order to initiate the decalcification process.

## Revendications

1. Procédé pour la détection de l'entartrage d'appareils produisant de l'eau chaude qui comportent un dispositif de production d'eau chaude (1), un dispositif d'utilisation d'eau chaude (2) et une conduit d'eau chaude (8) reliant le dispositif de production d'eau chaude (1) et le dispositif d'utilisation d'eau chaude (2) l'un à l'autre, caractérisé en ce que la température T_{g} de l'eau chauffée en vue du fonctionnement de l'appareil est mesurée de manière répétée dans la conduite d'eau chaude (8) et est comparée à une valeur initiale de température Tₐ qui correspond à l'état non entartré de l'appareil, et lorsqu'une valeur prédéterminée de la différence ΔT est dépassée, l'entartrage de l'appareil est affiché.

2. Procédé selon la revendication 1, caractérisé en ce que la mesure de la température T_{g} s'effectue après chaque démarrage à froid de l'appareil.

3. Procédé selon les revendications 1 ou 2, caractérisé en ce que la valeur initiale de la température Tₐ correspond à la température T_{g} mesurée après N démarrages à froid de l'appareil (N = nombre entier), le nombre N étant de préférence compris dans la plage de 1 à 50.

4. Procédé selon l'une des revendications 1 à 3, caractérisé en ce que l'affichage de l'entartrage de l'appareil ne s'effectue qu'après des dépassements répétés successifs de la valeur prédéterminée de la différence ΔT, et de préférence après 2 à 10 répétitions.

5. Procédé selon l'une des revendications 1 à 4, caractérisé en ce que la valeur prédéterminée de la différence ΔT est comprise dans la plage de 2° à 10°C et de préférence de 5° à 8°C.

6. Procédé selon l'une des revendications 1 à 5, caractérisé en ce que l'affichage de l'entartrage de l'appareil s'effectue acoustiquement ou optiquement, de préférence sur un écran, une LED ou un affichage LCD.

7. Procédé selon l'une des revendications 1 à 6, caractérisé en ce que la valeur initiale de la température Tₐ est conservée dans une mémoire électronique (3) de l'appareil, de préférence dans une EEPROM.

8. Procédé selon l'une des revendications 1 à 7, caractérisé en ce que la comparaison entre la température mesurée T_{g} et la valeur initiale de température Tₐ et la création du signal d'affichage de l'entartrage de l'appareil s'effectuent de manière électronique, de préférence dans un calculateur (4) de l'appareil.

9. Procédé selon l'une des revendications 1 à 8, caractérisé en ce que l'affichage de l'entartrage de l'appareil est conservé dans une mémoire électronique (3) de l'appareil, de préférence dans une EEPROM.

10. Utilisation du procédé selon l'une des revendications 1 à 9 sur des dispositifs pour la production d'eau chaude, en particulier des bouilleurs, fers à repasser à vapeur, nettoyeurs à vapeur, lave-vaisselle, machines à café, climatiseurs et lave-linge.

11. Dispositif en vue de l'exécution du procédé selon l'une des revendications 1 à 9, qui comporte un dispositif de production d'eau chaude (1), un dispositif d'utilisation d'eau chaude (2) et une conduite d'eau chaude (8) reliant le dispositif de production d'eau chaude (1) et le dispositif d'utilisation d'eau chaude (2) l'un à l'autre, caractérisé par une sonde de température (5) disposée sur la conduite d'eau chaude (8), et par un calculateur (4) auquel sont transmis les signaux produits par la sonde de température (5), pour leur mise en mémoire, leur comparaison et leur traitement, ainsi que par un dispositif d'affichage (6) qui présente de manière optique ou acoustique un signal, créé par le calculateur (4), indiquant l'existence d'un entartrage.

12. Dispositif selon la revendication 11, caractérisé en ce que la sonde de température (5) est installée directement dans la conduite d'eau chaude (8) reliant le dispositif de production d'eau chaude (1) au dispositif d'utilisation d'eau chaude (2), et est protégé mécaniquement au moyen d'un boîtier en matière synthétique sans cependant être isolé thermiquement et électriquement de l'eau.

13. Dispositif selon les revendications 11 ou 12, caractérisé en ce qu'il contient un dispositif d'actionnement pour lancer l'opération de détartrage.
